(19) Europäisches Patentamt / European Patent Office / Office européen des brevets

(11) **EP 4 303 626 A1**

(12) **EUROPEAN PATENT APPLICATION**

(43) Date of publication:
**10.01.2024 Bulletin 2024/02**

(21) Application number: **22183150.6**

(22) Date of filing: **05.07.2022**

(51) International Patent Classification (IPC):
**G01S 17/58** (2006.01)    **G01S 17/66** (2006.01)
**G08B 13/194** (2006.01)    **G08B 13/181** (2006.01)

(52) Cooperative Patent Classification (CPC):
**G01S 17/58; G01S 17/66**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AGC Glass Europe**
**1348 Louvain-La-Neuve (BE)**

(72) Inventors:
- **FRIART, Gaetan**
  **6041 Gosselies (BE)**
- **VAN DEN NESTE, Marc**
  **6041 Gosselies (BE)**

(74) Representative: **AGC Glass Europe**
**Technovation Centre**
**Intellectual Property Department**
**Rue Louis Blériot 12**
**6041 Gosselies (BE)**

(54) **DRONE DETECTION DEVICE**

(57)    The present invention relates to a system for detecting a drone (1) around a building (2). The system comprises at least one lidar (3) to monitor the area around the building (2). The lidar (3) is installed on the building (2). The system further comprises a processing unit able to detect the drone (1) and localize it and to determine its trajectory from raw data generated by the at least one lidar (3). The processing unit is programmed with deterministic and/or artificial intelligent algorithms. The system further comprises a control unit to inform about the presence of the drone (1) around the building (2). The disclosure further concerns the use of a glass as a window or spandrel of a building in combination with at least one lidar (3) in order to detect a drone (1) around the building (2). The disclosure also concerns the use of a glass as an optical window of a housing of a lidar (3). The glass has an absorption coefficient at the operating wavelength of the at least one lidar (3) of less than 15 m$^{-1}$, preferably less than 10 m$^{-1}$, even more preferably less than 5 m$^{-1}$. Very transparent glass in the near infrared, with weak or no impact on its aesthetic or its color, can be obtained by combining in the glass composition a low iron quantity and chromium in a range of specific contents.

Fig.3

**EP 4 303 626 A1**

**Description**

## FIELD OF THE INVENTION

The present invention relates to the field of drone detection devices. More specifically it relates to systems and methods to detect a drone around a building.

## BACKGROUND OF THE INVENTION

Nowadays drones, also known as unmanned aerial vehicles, are accessible to a large audience. For this reason they may pose public safety and privacy concerns especially when the drones are used for aerial surveillance without consent. To prevent unauthorized data collection, it is therefore needed to be able to detect and track drones in the vicinity of a building.

EP3418990A1 relates to a foreign drone detection by a detection drone equipped with a drone detector. It however requires to pilot the detection drone in order to detect some eventual foreign drone.

EP3139125A1 and US2017261613A1 relates to detection of a drone by a lidar. Such lidar can be ground based. However, this leads the lidar to be exposed to weather conditions.

There is therefore a need for a solution allowing to use lidar to detect and track drones around a building which would overcome the drawbacks of the prior art.

## SUMMARY OF THE INVENTION

The present invention concerns a system for detecting a drone around a building. The system comprises at least one lidar to monitor the area around the building. The lidar is installed on the building. The system further comprises a processing unit able to detect the drone and localize it and to determine its trajectory from raw data generated by the at least one lidar. The processing unit is programmed with deterministic and/or artificial intelligent algorithms. The system further comprises a control unit to inform about the presence of the drone around the building.

The present invention further concerns the use of a glass as a window or spandrel of a building in combination with at least one lidar in order to detect a drone around the building. The glass has an absorption coefficient at the operating wavelength of the at least one lidar of less than 15 $m^{-1}$, preferably less than 10 $m^{-1}$, even more preferably less than 5 $m^{-1}$.

The present invention further concerns the use of a glass as an optical window of a housing of a lidar, the housing being intended to be placed on a building in order to detect a drone around the building. The glass has an absorption coefficient at the operating wavelength of the at least one lidar of less than 15 $m^{-1}$, preferably less than 10 $m^{-1}$, even more preferably less than 5 $m^{-1}$.

The present invention further concerns a method for detecting a drone around a building.

## BRIEF DESCRIPTION OF THE DRAWINGS

The invention will now be described further, byway of examples, with reference to the accompanying drawings, wherein like reference numerals refer to like elements in the various figures. These examples are provided by way of illustration and not of limitation. The drawings are a schematic representation and not true to scale. The drawings do not restrict the invention in any way. More advantages will be explained with examples.

**Fig.1** illustrates an embodiment of the present invention.

**Fig.2** and **Fig.3** illustrate alternative embodiments of the present invention.

## DETAILED DESCRIPTION OF ILLUSTRATIVE EMBODIMENTS

The present invention will be described with respect to particular embodiments and with reference to certain drawings but the invention is not limited thereto but only by the claims.

While some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The present invention proposes a system for detecting a drone around a building.

The system of the present invention comprises at least one lidar. Lidar is an acronym for "light detection and ranging". It is sometimes called "laser scanning" or "3D scanning". The technology uses eye-safe laser beams to create a 3D-representation of the surveyed environment. Operating wavelength of lidar compatible with the present invention is comprised between 750 and 1650 nm (usually referred to as near-infrared range). More specifically, known operating wavelengths of currently produced lidars compatible with the present invention are 850 nm, 905 nm, 940 nm, 1064 nm, 1310 nm, 1350 nm, 1550 nm, 1650 nm. An acceptable variance of 25 nm around the nominal value of the wavelength may be considered, such that, for example, a wavelength range of 1525 to 1575 nm may be accepted around the nominal value of 1550 nm. The lidar monitors the area around the building from which a drone could fly. The lidar has a sufficient point cloud resolution to detect and localize a single drone in the vicinity of a building, contrary to a radar. Since a radar is working at larger wavelengths, its returned results aren't nearly as detailed as a lidar. Lidar data is of much higher accuracy and resolution when compared with radar data, making it possible to build exact 3D models of objects. Moreover a lidar acquires anonymized data (i.e. no acquisition of biometric data like facial information or skin/hair color) which makes it naturally GDPR (General Data Protection Regulation) compliant, contrary to a camera. This key feature allows the installation of the system in a city without extensive authorizations and security protocols.

The at least one lidar is installed on the building, meaning it is installed on a façade or on the roof of the building. Because of its small dimensions, such a lidar may be easily installed on a wall or roof of a building, without excessively impairing its aesthetics, especially for buildings protected as historic monuments. Such an installation is also advantageous in terms of cost. Such an installation allows also for installation in cities, even crowded avenues.

In a less preferred embodiment, the at least one lidar could also be installed in the close vicinity of the building, for example at a distance less than 2 meters from the building, meaning it may often still be installed in the building's grounds.

The system of the present invention further comprises a processing unit. The processing unit detects the drone and determines its trajectory from raw data obtained from the lidar. It is programmed with deterministic and/or artificial intelligent algorithms.

The system of the present invention further comprises a control unit. The control unit informs about the presence of the drone around the building.

According to a preferred embodiment, the at least one lidar is installed behind a window or spandrel of the building, the window or spandrel being transparent at the operating wavelength of the lidar. Such installation allows for protection of the lidar against weather conditions. Preferably, the window or spandrel behind which the lidar is placed is made of glass having an absorption coefficient at the operating wavelength of the at least one lidar of less than 15 $m^{-1}$, preferably less than 10 $m^{-1}$, even more preferably less than 5 $m^{-1}$.

According to an alternative embodiment, the at least one lidar is installed on a wall of the building, such as on a façade or on the roof of the building. In order to protect the lidar from weather conditions, the lidar is enclosed in a housing comprising an optical window. The optical window is transparent to the operating wavelength of the lidar. Preferably, the optical window is made of a glass having an absorption coefficient at the operating wavelength of the at least one lidar of less than 15 $m^{-1}$, preferably less than 10 $m^{-1}$, even more preferably less than 5 $m^{-1}$.

To quantify the low absorption of the glass sheet in the near infrared range, in the present description, the absorption coefficient is used in the wavelength range from 750 to 1650 nm. The absorption coefficient is defined by the ratio between the absorbance and the optical path length traversed by electromagnetic radiation in a given environment. It is expressed in $m^{-1}$. It is therefore independent of the thickness of the material but it is function of the wavelength of the absorbed radiation and the chemical nature of the material.

In the case of glass, the absorption coefficient ($\mu$) at a chosen wavelength $\lambda$ can be calculated from a measurement in transmission (T) as well as the refractive index n of the material (thick = thickness), the values of n, p and T being a function of the chosen wavelength $\lambda$:

$$\mu = -\frac{1}{thick} \cdot ln\left[\frac{-(1-\rho)^2 + \sqrt{(1-\rho)^4 + 4.T^2.\rho^2}}{2.T.\rho^2}\right]$$

with p = $(n-1)^2/(n+1)^2$.

According to the present invention, the glass having an absorption coefficient at the operating wavelength of the at least one lidar of less than 15 $m^{-1}$, preferably less than 10 $m^{-1}$, even more preferably less than 5 $m^{-1}$, may be a soda-lime-silica glass, alumino-silicate, boro-silicate, ...

Preferably, a glass composition compatible with the present invention comprises a total content expressed in weight percentages of glass:

$SiO_2$　　　　55 - 85%

(continued)

| | |
|---|---|
| $Al_2O_3$ | 0 - 30% |
| $B_2O_3$ | 0 - 20% |
| $Na_2O$ | 0 - 25% |
| CaO | 0-20% |
| MgO | 0-15% |
| $K_2O$ | 0-20% |
| BaO | 0 - 20%. |

More preferably, a glass composition compatible with the present invention comprises in a content expressed as total weight of glass percentages:

| | |
|---|---|
| $SiO_2$ | 55 - 78% |
| $Al_2O_3$ | 0 - 18% |
| $B_2O_3$ | 0 - 18% |
| $Na_2O$ | 0-20% |
| CaO | 0-15% |
| MgO | 0-10% |
| $K_2O$ | 0 - 10% |
| BaO | 0 - 5% |

More preferably, for reasons of lower production costs, the glass compatible with the present invention is made of soda-lime glass. A glass composition compatible with the present invention comprises a content expressed as the total weight of glass percentages:

| | |
|---|---|
| $SiO_2$ | 60 - 75% |
| $Al_2O_3$ | 0 - 6% |
| $B_2O_3$ | 0 - 4% |
| CaO | 0-15% |
| MgO | 0-10% |
| $Na_2O$ | 5 - 20% |
| $K_2O$ | 0 - 10% |
| BaO | 0 - 5%. |

In addition to its basic composition, the glass may include other components, nature and adapted according to quantity of the desired effect. A solution to obtain a very transparent glass in the near infrared, with weak or no impact on its aesthetic or its color, is to combine in the glass composition a low iron quantity and chromium in a range of specific contents. Thus, the glass preferably has a composition which comprises a content expressed as the total weight of glass percentages:

| | |
|---|---|
| Fe total (expressed as $Fe_2O_3$) | 0,002 - 0,06% |
| $Cr_2O_3$ | 0,0001 - 0,06 % |

Such glass compositions combining low levels of iron and chromium showed particularly good performance in terms of infrared reflection and show a high transparency in the visible and a little marked tint, near a glass called "extra-clear ". These compositions are described in international applications WO2014128016A1, WO2014180679A1, WO2015011040A1, WO2015011041A1, WO2015011042A1, WO2015011043A1 and WO2015011044A1, incorporated by reference in the present application.

The present invention further concerns the use of a glass as a window or spandrel of a building in combination with at least one lidar in order to detect a drone around the building. The glass has an absorption coefficient at the operating wavelength of the at least one lidar of less than 15 m$^{-1}$, preferably less than 10 m$^{-1}$, even more preferably less than 5 m$^{-1}$.

The present invention further concerns the use of a glass as an optical window of a housing of a lidar, the housing being intended to be placed on a building in order to detect a drone around the building. The glass has an absorption coefficient at the operating wavelength of the at least one lidar of less than 15 $m^{-1}$, preferably less than 10 $m^{-1}$, even more preferably less than 5 $m^{-1}$.

The present invention further proposes a method for detecting a drone around a building. The first step of the method is to monitor the area around the building. Such monitoring can be done using one lidar or a combination of several lidars, as specified in the preceding description. The at least one lidar is preferably placed in such a way that the area to monitor is covered by the union of the field of view of the at least one lidar. The second step is the detection of the drone and the localization and trajectory determination by a processing unit. The processing unit collects the raw data (point cloud) from the lidar and is able to proceed to the detection and localization and trajectory determination through deterministic and/or artificial intelligence algorithms. The third step is to transmit the information that a drone has been detected, done by a control unit.

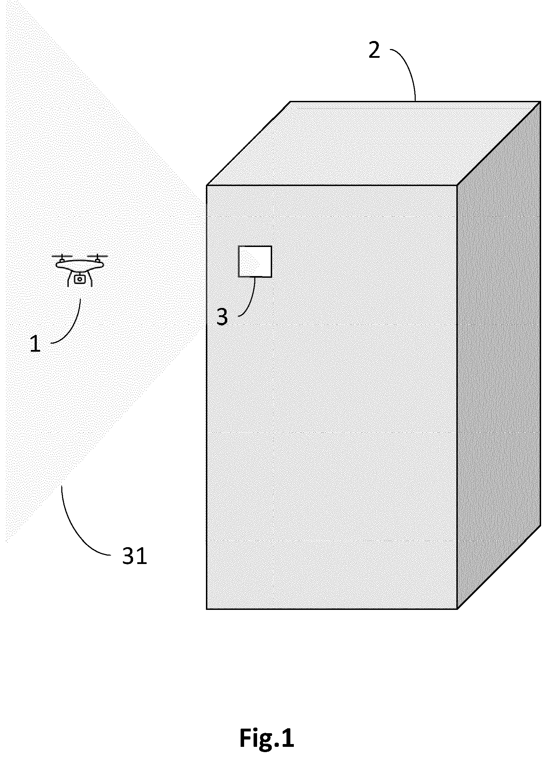

Referring to **Fig.1,** a building (2) is shown. A lidar (3) is installed on one of the façade of the building (2). The lidar (3) has a specific field of view (31), usually referred to as FOV. When a drone (1) enters in the FOV (31) of the lidar (3), raw data obtained from the lidar are transferred to the processing unit (not shown). Based on these data and on deterministic and/or artificial intelligent algorithms, the processing unit is able to detect the presence of the drone (1) and to localize its trajectory. A control unit (not shown) informs about the presence of the drone (1) around the building (2).

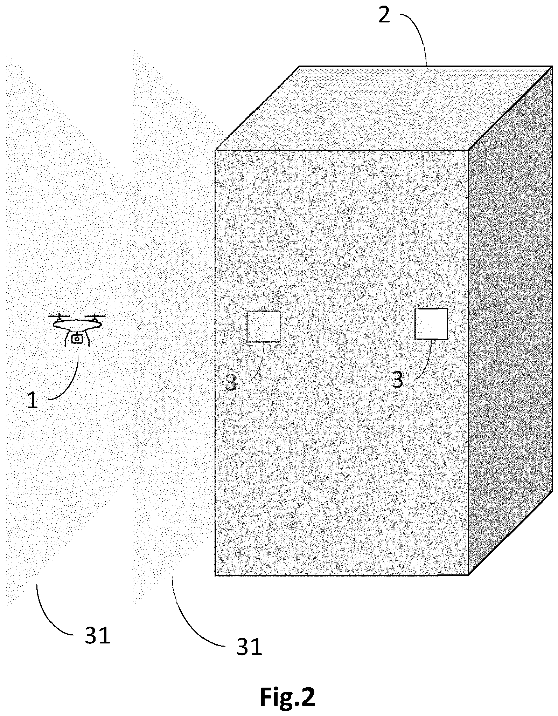

As shown in **Fig.2,** several lidars (3) can be installed on a same façade of the building (2).

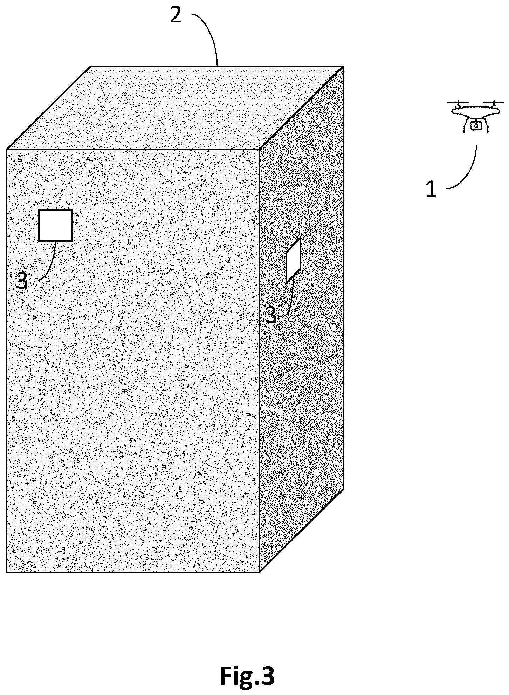

As shown in **Fig.3,** several lidars (3) can be installed on more than one façade of the building (2). Depending on the need to detect the drone (1), lidars can be installed on more than one façade of the building (2), eventually including also an installation on the roof of the building (2).

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

## Claims

1.  System for detecting a drone (1) around a building (2) comprising:

    a. at least one lidar (3) intended to monitor the area around the building (2), the at least one lidar (3) being installed on the building (2);
    b. a processing unit able to detect the drone (1) and localize it and to determine its trajectory from raw data generated by the at least one lidar (3), programmed with deterministic and/or artificial intelligent algorithms;
    c. a control unit intended to inform about the presence of the drone (1) around the building (2).

2.  System according to claim 1 wherein the at least one lidar (3) is configured to be installed behind a window or spandrel of the building (2), the window or spandrel being transparent at the operating wavelength of the at least one lidar (3).

3.  System according to claim 2 wherein the window is made of glass having an absorption coefficient at the operating wavelength of the at least one lidar (3) of less than 15 $m^{-1}$, preferably less than 10 $m^{-1}$, even more preferably less than 5 $m^{-1}$.

4.  System according to any of the previous claims wherein the lidar (3) is enclosed in a housing comprising an optical window, the optical window being transparent at the operating wavelength of the at least one lidar (3), the housing being configured to be installed on a wall of the building (2).

5.  System according to claim 4 wherein the optical window is made of a glass having an absorption coefficient at the operating wavelength of the at least one lidar (3) of less than 15 $m^{-1}$, preferably less than 10 $m^{-1}$, even more preferably less than 5 $m^{-1}$.

6.  System according to any of the previous claims wherein the glass has a composition which comprises a content expressed as the total weight of glass percentages:

Fe total (expressed as $Fe_2O_3$)     0,002 - 0,06%

(continued)

| | |
|---|---|
| $Cr_2O_3$ | 0,0001 - 0,06 % |

7. Use of a glass as a window or spandrel of a building (2) in combination with at least one lidar (3) in order to detect a drone (1) around the building (2), the glass having an absorption coefficient at the operating wavelength of the at least one lidar (3) of less than 15 $m^{-1}$, preferably less than 10 $m^{-1}$, even more preferably less than 5 $m^{-1}$.

8. Use of a glass as an optical window of a housing of a lidar (3), the housing being intended to be placed on a building (2) in order to detect a drone (1) around the building (2), the glass having an absorption coefficient at the operating wavelength of the at least one lidar (3) of less than 15 $m^{-1}$, preferably less than 10 $m^{-1}$, even more preferably less than 5 $m^{-1}$.

9. Method for detecting a drone (1) around a building (2), the method comprising the following steps:

a. Monitoring of the area around the building (2) by at least one lidar (3);
b. Detection of the drone (1) and localization and determination of its trajectory by a processing unit, based on raw data obtained from the lidar (3), the processing unit being programmed with deterministic and/or artificial intelligence algorithms;
c. Transmission of the detection of the drone (1) by a control unit.

**Fig.1**

**Fig.2**

**Fig.3**

Europäisches
Patentamt

European
Patent Office

Office européen
des brevets

## EUROPEAN SEARCH REPORT

**Application Number**

EP 22 18 3150

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0040195 A (UOK DESION&COMMUNICATION [KR]) 17 April 2020 (2020-04-17) | 1,9 | INV. G01S17/58 G01S17/66 |
| Y | * paragraphs [0007] - [0169] * ----- | 2-7 | G08B13/194 G08B13/181 |
| X | US 2019/250255 A1 (FRUCHT DAVID [IL]) 15 August 2019 (2019-08-15) | 1,9 | |
| Y | * paragraphs [0016] - [0067] * ----- | 2-7 | |
| Y | US 2022/177355 A1 (BOGAERTS MICHEL [BE]) 9 June 2022 (2022-06-09) * paragraphs [0075] - [0085] * ----- | 2,3,7 | |
| X | US 2020/371211 A1 (SARTENAER YANNICK [BE] ET AL) 26 November 2020 (2020-11-26) | 8 | |
| Y | * paragraphs [0009] - [0067] * ----- | 3-7 | |

**TECHNICAL FIELDS SEARCHED (IPC)**

G01S
G08B

The present search report has been drawn up for all claims

| Place of search | Date of completion of the search | Examiner |
|---|---|---|
| Munich | 9 November 2022 | Köppl, Martin |

## ANNEX TO THE EUROPEAN SEARCH REPORT
## ON EUROPEAN PATENT APPLICATION NO.

**EP 22 18 3150**

This annex lists the patent family members relating to the patent documents cited in the above-mentioned European search report.
The members are as contained in the European Patent Office EDP file on
The European Patent Office is in no way liable for these particulars which are merely given for the purpose of information.

**09-11-2022**

| Patent document cited in search report | | Publication date | Patent family member(s) | | Publication date |
|---|---|---|---|---|---|
| KR 20200040195 | A | 17-04-2020 | NONE | | |
| US 2019250255 | A1 | 15-08-2019 | GB | 2570910 A | 14-08-2019 |
| | | | IL | 264733 A | 30-05-2019 |
| | | | US | 2019250255 A1 | 15-08-2019 |
| US 2022177355 | A1 | 09-06-2022 | CN | 113646277 A | 12-11-2021 |
| | | | EA | 202192623 A1 | 20-12-2021 |
| | | | EP | 3947307 A1 | 09-02-2022 |
| | | | JP | 2022526574 A | 25-05-2022 |
| | | | US | 2022177355 A1 | 09-06-2022 |
| | | | WO | 2020200920 A1 | 08-10-2020 |
| US 2020371211 | A1 | 26-11-2020 | CN | 111149012 A | 12-05-2020 |
| | | | EA | 202090421 A1 | 22-05-2020 |
| | | | EP | 3665495 A1 | 17-06-2020 |
| | | | JP | 2020530117 A | 15-10-2020 |
| | | | US | 2020371211 A1 | 26-11-2020 |
| | | | WO | 2019030106 A1 | 14-02-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3418990 A1
- EP 3139125 A1
- US 2017261613 A1
- WO 2014128016 A1
- WO 2014180679 A1
- WO 2015011040 A1
- WO 2015011041 A1
- WO 2015011042 A1
- WO 2015011043 A1
- WO 2015011044 A1